# EUROPÄISCHE PATENTSCHRIFT

(11) **EP 3 479 678 B1**
(45) Veröffentlichungstag und Bekanntmachung des Hinweises auf die Patenterteilung: **22.07.2020**
(21) Anmeldenummer: 18203777.0
(22) Anmeldetag: 31.10.2018
(51) Int. Cl.: A01G 3/04

(54) **SÄGEVORRICHTUNG ZUM ZUSCHNEIDEN VON PFLANZEN**
SAWING DEVICE FOR CUTTING PLANTS
DISPOSITIF FORMANT SCIE DESTINÉ À LA COUPE DE PLANTES

(30) Priorität: 03.11.2017 DE 202017106656 U
(43) Veröffentlichungstag der Anmeldung: 08.05.2019
(73) Patentinhaber: Fliegl Agro-Center GmbH, 84556 Kastl (DE)
(72) Erfinder: Fligel, Josef, 84556, Kastl (DE)
(74) Vertreter: Nußbaum, Christopher

(56) Entgegenhaltungen:
- DE-A1-102007 003 432
- FR-A1- 2 946 497
- US-A- 4 241 565

## Beschreibung

Die Erfindung betrifft eine Sägevorrichtung zum Zuschneiden von Pflanzen, insbesondere von Ästen.

Oftmals müssen Pflanzen, beispielsweise Bäume, Büsche und dergleichen, von Zeit zu Zeit zugeschnitten bzw. beschnitten werden. Beispielsweise kann dies insbesondere erforderlich sein, wenn eine Straße seitlich mit Bäumen oder Büschen gesäumt ist. Um zu verhindern, dass die Bäume und/oder Büsche in unerwünschter Weise in Richtung der Straße hineinragen, ist es von Zeit zu Zeit erforderlich, diese Pflanzen zu beschneiden. Es ist an sich bekannt, dafür Sägevorrichtungen vorzusehen, welche beispielsweise an Frontladern, Radladern oder auch an Teleskopladern angebracht werden können, sodass derartige Sägevorrichtungen relativ zügig an den zu beschneidenden bzw. zuzuschneidenden Pflanzen vorbeibewegt werden können.

Die US 4 241 565 A zeigt eine auf einem Fahrzeug montierbare Schneidvorrichtung. Die Schneidvorrichtung kann über eine Art Arm hydraulisch ausgefahren und eingefahren werden. Ein translatorisch in Querrichtung ausfahrbares und einfahrbares Gegengewicht sorgt dafür, dass sich der Schwerpunkt des Fahrzeugs nicht zu sehr verschiebt, wenn die Schneidvorrichtung ausgefahren beziehungsweise eingefahren wird.

Die DE 10 2007 003 432 A1 zeigt ebenfalls eine auf einem Fahrzeug montierbare Schneidvorrichtung. Hierbei ist ebenfalls ein translatorisch in Querrichtung des Fahrzeugs ausfahrbares und einfahrbares Gegengewicht vorgesehen.

Die FR 2 946 497 A1 zeigt eine Sägevorrichtung mit mehreren Sägeblättern. Die Sägevorrichtung kann seitlich ausgefahren und eingefahren werden.

Es ist die Aufgabe der vorliegenden Erfindung, eine Sägevorrichtung bereitzustellen, mittels welcher auf besonders einfache und sichere Weise Pflanzen, insbesondere Äste, zugeschnitten werden können.

Diese Aufgabe wird durch eine Sägevorrichtung zum Zuschneiden von Pflanzen, insbesondere von Ästen, mit den Merkmalen des Anspruchs 1 gelöst. Vorteilhafte Ausgestaltungen mit zweckmäßigen und nicht-trivialen Weiterbildungen sind in den Unteransprüchen angegeben.

Die erfindungsgemäße Sägevorrichtung zum Zuschneiden von Pflanzen, insbesondere von Ästen, umfasst ein Traggestell zum Anbringen der Sägevorrichtung an einem Trägerfahrzeug. Bei dem Trägerfahrzeug kann es sich beispielsweise um einen Frontlader, Radlader oder auch Teleskoplader handeln. Ebenfalls möglich ist es auch, dass es sich bei dem Trägerfahrzeug um verschiedenste Kommunalfahrzeuge handelt, wie beispielweise Kleinlaster oder dergleichen.

Das Traggestell weist eine entsprechend geeignete mechanische Schnittstelle auf, mittels welcher das Traggestell und somit die gesamte Sägevorrichtung an einem Trägerfahrzeug befestigt werden kann.

Die erfindungsgemäße Sägevorrichtung umfasst des Weiteren eine zumindest mittelbar an einer ersten Seite des Traggestells angeordnete Sägeeinrichtung, welche in Querrichtung der Sägevorrichtung zwischen einer seitlich eingefahrenen Transportstellung und wenigstens einer seitlich nach außen ausgefahrenen Sägestellung verstellbar ist. Des Weiteren weist die erfindungsgemäße Sägevorrichtung ein zumindest mittelbar an einer zweiten Seite des Traggestells angeordnetes Gegengewicht auf, welches in Querrichtung der Sägevorrichtung zwischen einer seitlich eingefahrenen Transportstellung und wenigstens einer seitlich nach außen ausgefahrenen Ausgleichsstellung verstellbar ist, wobei die Sägeeinrichtung und das Gegengewicht in entgegengesetzte Richtung von ihrer jeweiligen Transportstellung in die Sägestellung und Ausgleichsstellung verstellbar sind.

Solange die Sägeeinrichtung nicht benötigt wird, kann diese in der seitlich eingefahrenen Transportstellung angeordnet werden, sodass diese beispielsweise bei einer Fahrt über öffentliche Straßen eine zulässige Maximalbreite nicht überschreitet. Sobald die Sägeeinrichtung zum Zuschneiden von Pflanzen, beispielsweise von Ästen oder dergleichen, verwendet werden soll, kann diese in zumindest eine seitlich nach außen ausgefahrene Sägestellung verstellt werden. Vorzugsweise kann die Sägeeinrichtung in mehrere unterschiedliche, seitlich nach außen ausgefahrene Sägestellungen verstellt werden. Zwischen einem Trägerfahrzeug, an welchem die Sägevorrichtung angebracht ist, und der Sägeeinrichtung kann während des Gebrauchs der Sägeeinrichtung, also beim Zuschneiden von Pflanzen, ein entsprechend großer Abstand eingestellt werden, sodass mittels der erfindungsgemäßen Sägevorrichtung ein besonders einfaches und sicheres Zuschneiden von Pflanzen erfolgen kann.

Dadurch, dass die erfindungsgemäße Sägevorrichtung noch das besagte Gegengewicht aufweist, welches aus der seitlich eingefahrenen Transportstellung in die wenigstens eine seitlich nach außen ausgefahrene Ausgleichsstellung verstellbar ist, kann eine Schwerpunktverschiebung der Sägevorrichtung in Querrichtung beim Einfahren und Ausfahren der Sägeeinrichtung unterbunden werden. Je nachdem, wie weit die Sägeeinrichtung seitlich ausgefahren oder eingefahren wird, kann das Gegengewicht entsprechend ebenfalls seitlich in entgegengesetzte Richtung eingefahren bzw. ausgefahren werden, sodass unabhängig von der Stellung der Sägeeinrichtung eine Schwerpunktlage der Sägevorrichtung in Querrichtung zumindest im Wesentlichen unverändert bleiben kann. Wird also die Sägeeinrichtung beispielsweise nach rechts ausgefahren, so kann das Gegengewicht nach links ausgefahren werden. Infolgedessen kann der Schwerpunkt der gesamten Sägevorrichtung beispielsweise in Querrichtung immer mittig verbleiben.

Durch das Vorsehen des verstellbaren Gegengewichts kann ein besonders sicherer Betrieb eines Trägerfahrzeugs gewährleistet werden, an welchem die Sägevorrichtung angebracht wird. Denn dadurch, dass mittels des Gegengewichts eine Verschiebung der Schwerpunktlage der Sägevorrichtung in Querrichtung beim Ausfahren und Einfahren der Sägeeinrichtung verhindert werden kann, kann gleichzeitig auch eine Schwerpunktverschiebung des Trägerfahrzeugs in Querrichtung verhindert werden, an welchem die Sägevorrichtung gerade angebracht ist. Instabile Fahrsituationen des Trägerfahrzeugs und insbesondere ein seitliches Umkippen des Trägerfahrzeugs können dadurch auf zuverlässige Weise verhindert werden.

Eine vorteilhafte Ausführungsform der Erfindung sieht vor, dass die Sägeeinrichtung translatorisch seitlich aus- und einfahrbar ist. Vorzugsweise ist die Sägeeinrichtung dafür an einem teleskopierbaren Querträger angeordnet, mittels welchem die Sägeeinrichtung translatorisch seitlich aus- und einfahrbar ist. Dadurch kann die Sägeeinrichtung auf besonders einfache Weise seitlich ausgefahren und eingefahren werden, je nachdem, wie die äußeren Randbedingungen beim Zuschneiden von Pflanzen gerade sind.

Eine weitere vorteilhafte Ausführungsform der Erfindung sieht vor, dass die Sägeeinrichtung um eine in Längsrichtung der Sägevorrichtung verlaufende Schwenkachse seitlich aus- und einklappbar gelagert ist. Vorzugsweise kann die Sägeeinrichtung dabei so weit seitlich ausgeklappt werden, dass die Sägeeinrichtung zumindest im Wesentlichen horizontal angeordnet ist, sodass mittels der Sägeeinrichtung beispielsweise Äste horizontal abgetrennt werden können. Vorzugsweise kann die Sägeeinrichtung von dieser zumindest im Wesentlichen horizontalen Stellung auch in eine zumindest im Wesentlichen senkrechte Stellung oder darüber hinaus verschwenkt werden. Vorzugsweise ist die Sägeeinrichtung dabei stufenlos zwischen diesen besagten Stellungen verschwenkbar. Aufgrund der Verschwenkbarkeit der Sägeeinrichtung kann mittels derselben besonders flexibel ein vorhandener Pflanzenbewuchs zugeschnitten werden.

In weiterer vorteilhafter Ausgestaltung der Erfindung ist es vorgesehen, dass das Gegengewicht translatorisch seitlich aus- und einfahrbar ist. Vorzugsweise ist es in diesem Zusammenhang vorgesehen, dass das Gegengewicht dafür an einem teleskopierbaren Querträger angeordnet ist, mittels welchem das Gegengewicht translatorisch seitlich aus- und einfahrbar ist. Dadurch kann die Schwerpunktlage der Sägevorrichtung auf einfache Weise durch seitliches Ausfahren und Einfahren des Gegengewichts beeinflusst werden, je nachdem, wie die Sägeeinrichtung gerade angeordnet wird.

Die Erfindung sieht vor, dass das Gegengewicht um eine in Längsrichtung der Sägevorrichtung verlaufende Schwenkachse seitlich aus- und einklappbar gelagert ist. Zum einen kann das Gegengewicht dadurch besonders platzsparend an das Traggestell herangeklappt bzw. herangeschwenkt werden. Zum anderen kann das Gegengewicht durch seitliches Ausklappen bzw. seitliches Herunterschwenken auf besonders einfache Weise dazu beitragen, die Schwerpunktlage der Sägevorrichtung zumindest im Wesentlichen, bezogen auf ihre Querrichtung, unverändert zu belassen bzw. zu halten, auch wenn die Sägeeinrichtung seitlich ausgefahren, eingefahren, seitlich ausgeschwenkt oder seitlich herangeschwenkt wird. Insbesondere in Kombination einer Verschwenkbarkeit und translatorischen Bewegbarkeit des Gegengewichts wird ein besonders großer Spielraum geschaffen, um mittels eines relativ wenig wiegenden Gegengewichts einen Ausgleich für die Sägeeinrichtung zu schaffen, wenn diese in unterschiedliche Stellungen aus- und eingefahren wird.

Gemäß einer weiteren vorteilhaften Ausführungsform der Erfindung ist es vorgesehen, dass eine Steuereinrichtung der Sägevorrichtung dazu eingerichtet ist, das Gegengewicht und die Sägeeinrichtung derart aufeinander abgestimmt seitlich ein- und auszufahren, dass sich ein Schwerpunkt der Sägevorrichtung in Querrichtung zumindest im Wesentlichen nicht verschiebt. Ein Bediener der Sägevorrichtung muss also die Stellung der Sägeeinrichtung und die Stellung des Gegengewichts nicht einzeln manuell ansteuern. Stattdessen kann die Steuereinrichtung einfach dafür sorgen, dass in Abhängigkeit von einer Stellung der Sägeeinrichtung das Gegengewicht entsprechend passend angeordnet wird. Beispielsweise kann es vorgesehen sein, dass die Stellung der Sägeeinrichtung manuell steuerbar ist, wobei die Stellung des Gegengewichts gar nicht manuell gesteuert werden muss, da dies die Steuereinrichtung in Abhängigkeit von der gewählten Stellung der Sägeeinrichtung automatisch und vorzugsweise zeitlich synchronisiert übernimmt. Vorzugsweise kann die synchrone Verstellung und insbesondere unabhängig davon auch eine automatische Verstellung des Gegengewichts deaktivierbar sein. Beispielsweise kann ein Absperrhahn oder eine andere Betätigungseinrichtung vorgesehen sein, mittels welcher ein Bediener auf einfache Weise das seitliche Ausfahren und Einfahren bzw. seitliche Wegschwenken und Heranschwenken des Gegengewichts unterbinden kann. Dies kann insbesondere bei Fahrten in Hanglagen von Vorteil sein, wenn eine Verstellung des Gegengewichts nicht benötigt wird oder sogar ein nach außen Ausfahren des Gegenwichts sogar von Nachteil wäre. Ferner ist es auch möglich, dass die Steuervorrichtung dazu eingerichtet ist, in Abhängigkeit von einer erfassten Neigung der Sägevorrichtung und/oder von einem Trägerfahrzeug, an welchem die Sägevorrichtung angebracht ist, automatisch die Stellung des Gegengewichts zu steuern, sodass die Schwerpunktlage der Sägevorrichtung - sofern möglich - in Querrichtung möglichst mittig gehalten wird.

In weiterer vorteilhafter Ausgestaltung der Erfindung ist es vorgesehen, dass die Sägevorrichtung ein hydraulisches System zum Verstellen des Gegengewichts und der Sägeeinrichtung aufweist. Die translatorische und/oder rotatorische Verstellung des Gegengewichts und der Sägeeinrichtung kann beispielsweise durch Hydraulikzylinder erfolgen. Natürlich ist es auch möglich, dass die Sägeeinrichtung und das Gegengewicht mittels anderer Aktuatoren verstellt werden.

Schließlich ist es gemäß einer weiteren vorteilhaften Ausführungsform der Erfindung vorgesehen, dass die Sägeeinrichtung zumindest ein in Rotation versetzbares Sägeblatt oder zumindest ein translatorisch in Oszillation versetzbares Sägeblatt aufweist. Im Falle des in Rotation versetzbaren Sägeblatts ist es vorzugsweise vorgesehen, dass die Sägeeinrichtung mehrere dieser in Rotation versetzbaren Sägeblätter aufweist, also vorzugsweise mehrere einzelne Kreissägen aufweist, sodass eine möglichst große Schnittbreite erreicht werden kann.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:

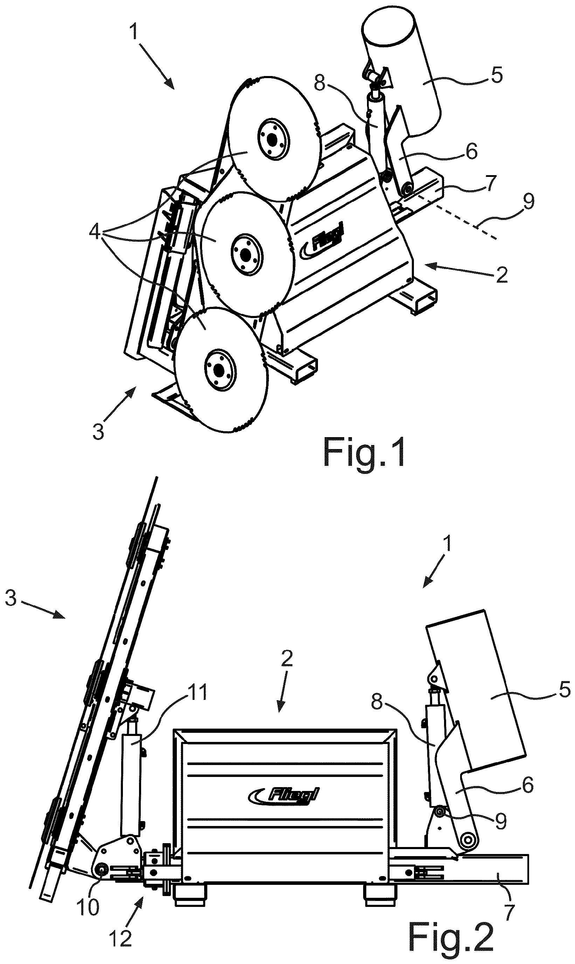

- Fig.1: eine Perspektivansicht einer Sägevorrichtung zum Zuschneiden von Pflanzen, insbesondere von Ästen, welche an einem Trägerfahrzeug anbringbar ist und eine verstellbare Sägeeinrichtung sowie ein verstellbares Gegengewicht für die Sägeeinrichtung aufweist, wobei die Sägeeinrichtung und das Gegengewicht beide in ihrer seitlich herangeklappten Transportstellung angeordnet sind;
- Fig. 2: eine Frontalansicht der Sägevorrichtung, wobei die Sägeeinrichtung und das Gegengewicht wiederum in ihrer Transportstellung angeordnet sind;

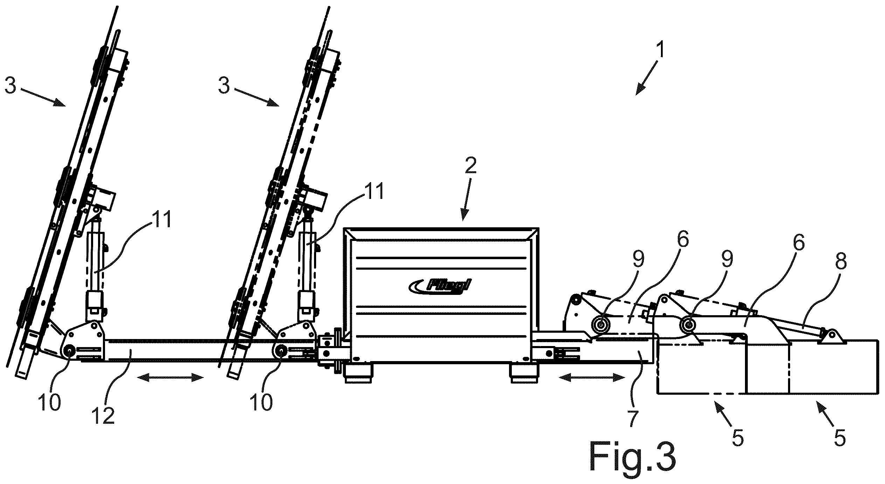

- Fig. 3: eine weitere Frontalansicht der Sägevorrichtung, wobei das Gegengewicht in einer seitlich nach außen und nach unten geklappten Ausgleichsstellung in zwei translatorisch unterschiedlich weit ausgefahrenen Positionen dargestellt ist, während die Sägeeinrichtung einmal translatorisch ausgefahren und einmal translatorisch eingefahren dargestellt ist während diese jeweils nach oben geklappt ist; und in

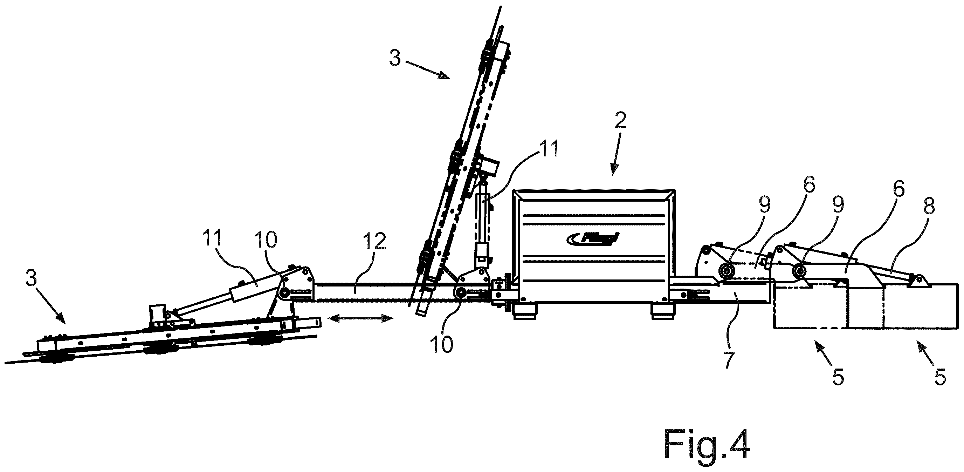

- Fig. 4: eine weitere Frontalansicht der Sägevorrichtung, wobei sich diese Darstellung sich von der Darstellung in Fig. 3 dadurch unterscheidet, dass die Sägeeinrichtung neben der translatorisch eingefahrenen und nach oben geklappten Stellung noch in einer seitlich nach unten geklappten sowie translatorisch ausgefahrenen Stellung dargestellt ist.

In den Figuren sind gleiche oder funktionsgleiche Elemente mit den gleichen Bezugszeichen versehen worden.

Eine Sägevorrichtung 1 zum Zuschneiden von Pflanzen, insbesondere von Ästen, ist in einer Perspektivansicht in Fig. 1 gezeigt. Die Sägevorrichtung 1 umfasst ein Traggestell 2 zum Anbringen der Sägevorrichtung 1 an einem Trägerfahrzeug. So kann die Sägevorrichtung 1 beispielsweise über entsprechende Anbindungspunkte bzw. mechanische Schnittstellen des Traggestells 2 zum Beispiel an einem Frontlader, Radlader oder Teleskoplader angebracht werden.

Seitlich am Traggestell 2 ist eine Sägeeinrichtung 3 mit drei in Rotation versetzbaren Sägeblättern 4 angeordnet. Bei den Sägeblättern 4 handelt es sich vorzugsweise um Hartmetall-Sägeblätter, die durch ihre Anordnung auf einer Breite von ca. 2100 mm einen sauberen und geraden Schnitt von Hölzern bis ca. 280 mm Durchmesser garantieren. Vorzugsweise weisen die Sägeblätter 4 einen Blattdurchmesser von 700 mm auf, wobei am Außenumfang vorzugsweise eine Vielzahl von Hartmetall-Zähnen vorgesehen ist. Mittels der Sägeeinrichtung 3 sind auch besonders feine Arbeiten, etwa beim Beschnitt von Sträuchern oder Gestrüpp, bis zu einer Arbeitsgeschwindigkeit von 8 km/h möglich.

Vorzugsweise werden die einzelnen Sägeblätter 4 über einen hier nicht näher dargestellten Keilriemenantrieb angetrieben, welcher besonders ruhig läuft. Statt der in Rotation versetzbaren Sägeblätter 4 ist es auch möglich, dass beispielsweise ein translatorisch in Oszillation versetzbares Sägeblatt vorgesehen wird.

Die Sägeeinrichtung 3 ist vorliegend in ihrer seitlich eingefahrenen und nach oben geklappten Transportstellung angeordnet. Die Sägeeinrichtung 3 kann dabei einerseits, bezogen auf die Querrichtung der Sägevorrichtung 1, translatorisch ausgefahren und eingefahren werden. Andererseits kann die Sägeeinrichtung 3 zudem noch nach unten herabgeschwenkt und in die hier dargestellte Transportstellung nach oben sowie seitlich herangeschwenkt werden.

Um eine unerwünschte Verschiebung des Schwerpunkts der Sägevorrichtung 1 in Querrichtung beim seitlichen Ausfahren und Einfahren, sei es translatorisch oder auch durch eine Schwenkbewegung, der Sägeeinrichtung 3 zu verhindern, umfasst die Sägevorrichtung 1 noch ein Gegengewicht 5, welches auf der gegenüberliegenden Seite des Traggestells 2 angeordnet ist. Das Gegengewicht 5 ist über zwei Tragarme 6 verschwenkbar an einem Querträger 7 angebracht, welcher beispielsweise ein Teil des Traggestells 2 sein kann.

Das Gegengewicht 5 ist dabei mittels eines Hydraulikzylinders 8 zwischen der hier gezeigten, seitlich nach oben geklappten Transportstellung und einer hier nicht dargestellten, seitlich nach außen und nach unten geklappten Ausgleichsstellung um eine in Längsrichtung der Sägevorrichtung 1 verlaufende Schwenkachse 9 verschwenkbar. Zudem kann das Gegengewicht 5 noch seitlich ausgefahren und eingefahren werden, wobei dies dadurch realisiert ist, dass der Querträger 7 teleskopierbar ist.

In Fig. 2 ist die Sägevorrichtung 1 in einer Frontalansicht gezeigt, wobei die Sägeeinrichtung 3 und das Gegengewicht 5 wie in Fig. 1 positioniert sind. In der vorliegenden Darstellung ist gut zu erkennen, dass die Sägeeinrichtung 3 ebenfalls um eine in Längsrichtung der Sägevorrichtung 1 verlaufende Schwenkachse 10 verschwenkbar ist. Ein weiterer Hydraulikzylinder 11 ist dabei vorgesehen, mittels welchem die Sägeeinrichtung 3 um die Schwenkachse 10 verschwenkt werden kann. Des Weiteren ist die Sägeeinrichtung 3 ebenfalls an einem Querträger 12, welcher beispielsweise zum Traggestell 2 gehören kann, angeordnet, wobei dieser Querträger 12 ebenfalls teleskopierbar ausgebildet ist. Dadurch kann die Sägeeinrichtung 3 seitlich ausgefahren und eingefahren werden.

In Fig. 3 ist die Sägevorrichtung 1 in einer weiteren Frontalansicht gezeigt, wobei die Sägeeinrichtung 3 und das Gegengewicht 5 in zwei unterschiedlichen Stellungen dargestellt sind, weshalb die Sägeeinrichtung 3 und das Gegengewicht 5 jeweils doppelt dargestellt sind, obwohl die Sägevorrichtung 1 natürlich nur die eine Sägeeinrichtung 3 und natürlich nur das eine Gegengewicht 5 aufweist.

Die Sägeeinrichtung 3 ist einmal in ihrer seitlich eingefahrenen Position, also wie bereits in Fig. 1 und Fig. 2 angeordnet, dargestellt. Des Weiteren ist die Sägeeinrichtung 3 noch mittels des teleskopierbaren Querträgers 11 seitlich in eine ausgefahrene Arbeitsstellung verbracht dargestellt. Die beiden Stellungen der Sägeeinrichtung 3 können also durch rein translatorische Bewegung in Querrichtung der Sägevorrichtung 1 eingenommen werden.

Das Gegengewicht 5 ist ebenfalls in zwei unterschiedlichen Stellungen dargestellt, wobei das Gegengewicht 5 einmal in einer translatorisch eingefahrenen Stellung und einmal in einer translatorisch nach außen ausgefahrenen Stellung dargestellt ist. In beiden Fällen ist das Gegengewicht 5 bereits um die Schwenkachse 9 nach seitlich außen und unten durch entsprechende Betätigung des Hydraulikzylinders 8 bewegt worden.

In Fig. 4 ist die Sägevorrichtung 1 in einer weiteren Frontalansicht gezeigt, wobei sich diese von der in Fig. 3 gezeigten Darstellung dadurch unterscheidet, dass die Sägeeinrichtung 3 nicht nur translatorisch seitlich ausgefahren, sondern zusätzlich in dieser Stellung auch noch um die Schwenkachse 10 durch Betätigung des Hydraulikzylinders 11 nach unten geklappt bzw. verschwenkt worden ist. Auf der in der hochgeklappten Stellung dem Boden zugewandten Seite weist die Sägeeinrichtung 3 vorzugsweise noch einen nicht näher bezeichneten Schutzbügel auf. Dieser verhindert, dass das unterste der drei Sägeblätter 4 mit dem Boden in Kontakt geraten kann.

Wie anhand der verschiedenen Darstellungen zu erkennen, können sowohl die Sägeeinrichtung 3 als auch das Gegengewicht 5 in ganz unterschiedliche Stellungen bewegt werden, indem diese translatorisch bewegt und zusätzlich noch verschwenkt werden. Vorzugsweise weist die Sägevorrichtung 1 eine hier nicht näher dargestellte Steuereinrichtung auf, welche dazu eingerichtet ist, das Gegengewicht 5 und die Sägeeinrichtung 3 derart aufeinander abgestimmt translatorisch und/oder rotatorisch seitlich ein- und auszufahren, dass sich ein Schwerpunkt der Sägevorrichtung 1 in Querrichtung zumindest im Wesentlichen nicht verschiebt.

Beispielsweise kann es vorgesehen sein, dass ein Benutzer die Sägeeinrichtung 3 manuell verstellen kann, indem er einfach vorgibt, wie weit die Sägeeinrichtung 3 translatorisch aus- oder eingefahren bzw. verschwenkt werden soll. Gekoppelt an die jeweils gewählte Stellung der Sägeeinrichtung 3 ergibt sich dann automatisch eine entsprechende Anordnung des Gegengewichts 5, sodass ein Benutzer der Sägevorrichtung 1 die Anordnung des Gegengewichts 5, also die translatorische und/oder rotatorische Bewegung des Gegengewichts 5, nicht selbst steuern muss.

Stattdessen übernimmt dies einfach die besagte Steuereinrichtung der Sägevorrichtung 1. Das als Kontergewicht dienende Gegengewicht 5 gleicht also einseitige Belastungen bzw. Schwerpunktverschiebungen durch unterschiedliche Stellungen der Sägeeinrichtung 3 aus. Diese Funktion kann vorzugsweise unkompliziert per Absperrhahn deaktiviert werden, wenn etwa in Hanglage das Gegengewicht 5 beispielsweise nicht benötigt wird.

Dadurch, dass die Sägeeinrichtung 3 sowohl translatorisch verstellbar als auch verschwenkbar ist, können Pflanzen auf unterschiedlichste Weise mittels der Sägevorrichtung 1 zugeschnitten werden, sei es, indem die Sägeblätter 4 der Sägeeinrichtung 3 beispielsweise horizontal, vertikal oder in einer Neigungsstellung dazwischen angeordnet werden. Durch die seitliche Teleskopierbarkeit der Sägeeinrichtung 3 kann ein Trägerfahrzeug, an welchem die Sägevorrichtung 1 angebracht ist, beispielsweise an einem Straßenrand fahren, während die Sägeblätter 4 der Sägeeinrichtung 3 seitlich versetzt zur Straße Pflanzen beschneiden, und zwar in sicherem Abstand zu einer Fahrerkabine des Trägerfahrzeugs.

### BEZUGSZEICHENLISTE:

- 1: Sägevorrichtung
- 2: Traggestell
- 3: Sägeeinrichtung
- 4: Sägeblatt
- 5: Gegengewicht
- 6: Tragarm
- 7: Querträger
- 8: Hydraulikzylinder
- 9: Schwenkachse
- 10: Schwenkachse
- 11: Hydraulikzylinder
- 12: Querträger

## Patentansprüche

1. Sägevorrichtung (1) zum Zuschneiden von Pflanzen, insbesondere von Ästen, umfassend
- ein Traggestell (2) zum Anbringen der Sägevorrichtung (1) an einem Trägerfahrzeug;
- eine zumindest mittelbar an einer ersten Seite des Traggestells (2) angeordnete Sägeeinrichtung (3), welche in Querrichtung der Sägevorrichtung (1) zwischen einer seitlich eingefahrenen Transportstellung und wenigstens einer seitlich nach außen ausgefahrenen Sägestellung verstellbar ist;
- ein zumindest mittelbar an einer zweiten Seite des Traggestells (2) angeordnetes Gegengewicht (5), welches in Querrichtung der Sägevorrichtung (1) zwischen einer seitlich eingefahrenen Transportstellung und wenigstens einer seitlich nach außen ausgefahrenen Ausgleichsstellung verstellbar ist, wobei die Sägeeinrichtung (3) und das Gegengewicht (5) in entgegengesetzte Richtungen von ihrer jeweiligen Transportstellung in die Sägestellung und Ausgleichsstellung verstellbar sind;
- wobei das Gegengewicht (5) um eine in Längsrichtung der Sägevorrichtung (1) verlaufende Schwenkachse (9) seitlich aus- und einklappbar gelagert ist.

2. Sägevorrichtung (1) nach Anspruch 1,
**dadurch gekennzeichnet, dass**
die Sägeeinrichtung (3) translatorisch seitlich aus- und einfahrbar ist.

3. Sägevorrichtung (1) nach Anspruch 2,
**dadurch gekennzeichnet, dass**
die Sägeeinrichtung (3) an einem teleskopierbaren Querträger (12) angeordnet ist, mittels welchem die Sägeeinrichtung (3) translatorisch seitlich aus- und einfahrbar ist.

4. Sägevorrichtung (1) nach einem der vorhergehenden Ansprüche,
**dadurch gekennzeichnet, dass**
die Sägeeinrichtung (3) um eine in Längsrichtung der Sägevorrichtung (1) verlaufende Schwenkachse (10) seitlich aus- und einklappbar gelagert ist.

5. Sägevorrichtung (1) nach einem der vorhergehenden Ansprüche,
**dadurch gekennzeichnet, dass**
das Gegengewicht (5) translatorisch seitlich aus- und einfahrbar ist.

6. Sägevorrichtung (1) nach Anspruch 5,
**dadurch gekennzeichnet, dass**
das Gegengewicht (5) an einem teleskopierbaren Querträger (7) angeordnet ist, mittels welchem das Gegengewicht (5) translatorisch seitlich aus- und einfahrbar ist.

7. Sägevorrichtung (1) nach einem der vorhergehenden Ansprüche,
**dadurch gekennzeichnet, dass**
eine Steuereinrichtung der Sägevorrichtung (1) dazu eingerichtet ist, das Gegengewicht (5) und die Sägeeinrichtung (3) derart aufeinander abgestimmt seitlich ein- und auszufahren, dass sich ein Schwerpunkt der Sägevorrichtung (1) in Querrichtung zumindest im Wesentlichen nicht verschiebt.

8. Sägevorrichtung (1) nach einem der vorhergehenden Ansprüche,
**dadurch gekennzeichnet, dass**
die Sägevorrichtung (1) ein hydraulisches System zum Verstellen des Gegengewichts (5) und der Sägeeinrichtung (3) aufweist.

9. Sägevorrichtung (1) nach einem der vorhergehenden Ansprüche,
**dadurch gekennzeichnet, dass**
die Sägeeinrichtung (3) zumindest ein in Rotation versetzbares Sägeblatt (4) oder zumindest ein translatorisch in Oszillation versetzbares Sägeblatt aufweist.

## Claims

1. Sawing device (1) for cutting plants, in particular branches, comprising
- a support frame (2) for attaching the sawing device (1) to a carrier vehicle;
- a sawing device (3) which is arranged at least indirectly on a first side of the support frame (2) and which can be adjusted in the transverse direction of the sawing device (1) between a laterally retracted transport position and at least one laterally outwardly extended sawing position;
- a counterweight (5) which is arranged at least indirectly on a second side of the support frame (2) and which can be adjusted in the transverse direction of the sawing device (1) between a laterally retracted transport position and at least one laterally outwardly extended compensating position, wherein the sawing device (3) and the counterweight (5) can be adjusted in opposite directions from their respective transport position into the sawing position and compensating position;
- wherein the counterweight (5) is mounted about a pivot axis (9) running in the longitudinal direction of the sawing device (1) such that it can be laterally extended and retracted.

2. Sawing device (1) according to claim 1,
**characterised in that**
the sawing device (3) can be laterally extended and retracted in a translational manner.

3. Sawing device (1) according to claim 2,
**characterised in that**
the sawing device (3) is arranged on a telescopic cross member (12), by means of which the sawing device (3) can be laterally extended and retracted in a translational manner.

4. Sawing device (1) according to any of the preceding claims,
**characterised in that**
the sawing device (3) is mounted about a pivot axis (10) running in the longitudinal direction of the sawing device (1) such that it can be laterally extended and retracted.

5. Sawing device (1) according to any of the preceding claims,
**characterised in that**
the counterweight (5) can be laterally extended and retracted in a translational manner.

6. Sawing device (1) according to claim 5,
**characterised in that**
the counterweight (5) is arranged on a telescopic cross member (7), by means of which the counterweight (5) can be laterally extended and retracted in a translational manner.

7. Sawing device (1) according to any of the preceding claims,
**characterised in that**
a control device of the sawing device (1) is configured to laterally extend and retract the counterweight (5) and the sawing device (3) in coordination with one another in such a way that a centre of gravity of the sawing device (1) is at least substantially not displaced in the transverse direction.

8. Sawing device (1) according to any of the preceding claims,
**characterised in that**
the sawing device (1) has a hydraulic system for adjusting the counterweight (5) and the sawing device (3).

9. Sawing device (1) according to any of the preceding claims,
**characterised in that**
the sawing device (3) has at least one saw blade (4) which can be rotated or at least one saw blade which can be oscillated in a translational manner.

## Revendications

1. Dispositif formant scie (1) pour la taille de plantes, en particulier de branches, comprenant
- un support porteur (2) pour apposer le dispositif formant scie (1) à un véhicule porteur ;
- un appareil formant scie (3) agencé au moins indirectement sur un premier côté du support porteur (2), lequel peut être réglé dans le sens transversal du dispositif formant scie (1) entre une position de transport rentrée latéralement et au moins une position de scie sortie vers l'extérieur latéralement ;
- un contrepoids (5), agencé au moins indirectement sur un second côté du support porteur (2), lequel peut être réglé dans le sens transversal du dispositif formant scie (1) entre une position de transport rentrée latéralement et au moins une position de compensation sortie vers l'extérieur latéralement, dans lequel l'appareil formant scie (3) et le contrepoids (5) peuvent être réglés dans des directions opposées de leur position de transport respective dans la position de scie et la position de compensation ;
- dans lequel le contrepoids (5) est entreposé de manière à pouvoir être déplié et replié latéralement autour d'un axe de pivotement (9) passant dans le sens longitudinal du dispositif formant scie (1).

2. Dispositif formant scie (1) selon la revendication 1,
**caractérisé en ce que**
l'appareil formant scie (3) peut être sorti et rentré latéralement en translation.

3. Dispositif formant scie (1) selon la revendication 2,
**caractérisé en ce que**
l'appareil formant scie (3) est agencé sur une traverse télescopique (12), au moyen de laquelle l'appareil formant scie (3) peut être sorti et rentré latéralement en translation.

4. Dispositif formant scie (1) selon l'une quelconque des revendications précédentes,
**caractérisé en ce que**
l'appareil formant scie (3) est entreposé de manière à pouvoir être déplié et replié latéralement autour d'un axe de pivotement (10) passant dans le sens longitudinal du dispositif formant scie (1).

5. Dispositif formant scie (1) selon l'une quelconque des revendications précédentes,
**caractérisé en ce que**
le contrepoids (5) peut être sorti et rentré latéralement en translation.

6. Dispositif formant scie (1) selon la revendication 5,
**caractérisé en ce que**
le contrepoids (5) est agencé sur une traverse télescopique (7), au moyen de laquelle le contrepoids (5) peut être sorti et rentré latéralement en translation.

7. Dispositif formant scie (1) selon l'une quelconque des revendications précédentes,
**caractérisé en ce qu'**
un appareil de commande du dispositif formant scie (1) est conçu pour faire entrer et sortir latéralement le contrepoids (5) et l'appareil formant scie (3) de manière synchronisée de sorte qu'un centre de gravité du dispositif formant scie (1) ne se déplace au moins essentiellement pas dans le sens transversal.

8. Dispositif formant scie (1) selon l'une quelconque des revendications précédentes,
**caractérisé en ce que**
le dispositif formant scie (1) présente un système hydraulique pour régler le contrepoids (5) et l'appareil formant scie (3).

9. Dispositif formant scie (1) selon l'une quelconque des revendications précédentes,
**caractérisé en ce que**
l'appareil formant scie (3) présente au moins une lame de scie (4) pouvant être décalée en rotation ou au moins une lame de scie pouvant être décalée de manière translatoire en oscillation.
